# EUROPEAN PATENT APPLICATION

(11) **EP 4 618 470 A1**
(43) Date of publication of application: **17.09.2025**
(21) Application number: 25160267.8
(22) Date of filing: 26.02.2025
(51) Int. Cl.: H04L 9/08

(54) **CONTROL DEVICE, QUANTUM KEY DISTRIBUTION SYSTEM, CONTROL METHOD, AND COMPUTER-READABLE MEDIUM**

(30) Priority: 14.03.2024 JP 2024039965
(71) Applicant: Kabushiki Kaisha Toshiba, Tokyo 105-0023 (JP)
(72) Inventor: Kujiraoka, Mamiko, Tokyo (JP); Murakami, Akira, Tokyo (JP); Tanizawa, Yoshimichi, Tokyo (JP)
(74) Representative: Marks & Clerk LLP

(57) **Abstract**

According to an arrangement, a control device (2) includes a processing unit (21) configured to: calculate a generation speed of a cryptographic key based on output information output from a quantum key distribution (QKD) device (1a, 1b), the QKD device (1a, 1b) including a detector configured to detect photon to be used to generate the cryptographic key by QKD; and control a gate time window during which the photon is detected, based on the generation speed of the cryptographic key.

## Description

### FIELD

The present disclosure relates to a control device, a quantum key distribution system, a control method, and a computer-readable medium.

### BACKGROUND

As a result of development of information and communications technology, various types of data have been transmitted or received, and thus a major issue has been to secure privacy and security of information to be transmitted. An example of a cryptographic technique that cannot be decrypted even if computation capabilities of computers have improved is a quantum cryptography communication technique for performing encrypted communication by using a key shared by quantum key distribution, and the practical use of the quantum cryptography communication technique has been expected.

However, in a conventional technique, it has been difficult to improve key generation speed while preventing an error rate of quantum key distribution from increasing due to crosstalk.

### BRIEF DESCRIPTION OF THE DRAWINGS

Fig. 1 is a diagram illustrating an example of a configuration of a quantum key distribution system according to an arrangement;
Fig. 2 is a flowchart illustrating an example of a control method according to the arrangement;
Fig. 3 is a diagram for explaining an example of a method of controlling a gate time window according to a first variation of the arrangement;
Fig. 4 is a diagram illustrating an example of a configuration of a quantum key distribution system according to a second variation of the arrangement;
Fig. 5 is a diagram illustrating an example of a configuration of a quantum key distribution system according to a third variation of the arrangement;
Fig. 6 is a diagram illustrating an example of a hardware configuration of a QKD device according to the arrangement; and
Fig. 7 is a diagram illustrating an example of a hardware configuration of a control device according to the arrangement.

### DETAILED DESCRIPTION

In general, according to one arrangement, a control device includes a processing unit configured to: calculate a generation speed of a cryptographic key based on output information output from a quantum key distribution (QKD) device, the QKD device including a detector configured to detect photon to be used to generate the cryptographic key by QKD; and control a gate time window during which the photon is detected, based on the generation speed of the cryptographic key.

Exemplary arrangements of a control device, a quantum key distribution system, a control method, and a computer-readable medium will be explained below in detail with reference to the accompanying drawings. The present invention is not limited to the following arrangements.

The present arrangement relates to a quantum key distribution (QKD) device and a quantum encrypted communication system, and in particular, a QKD device that can reduce an influence on key generation speed of crosstalk serving as signal light for other communication that enters from a communication path, and a quantum key distribution system.

In the present arrangement, it is assumed that the protocol of quantum key distribution is the BB84 protocol, and sifting processing and key distillation processing are performed to perform processing for generating a quantum key (a cryptographic key), and key generation speed is calculated in a process of the generation processing.

### Example of Configuration

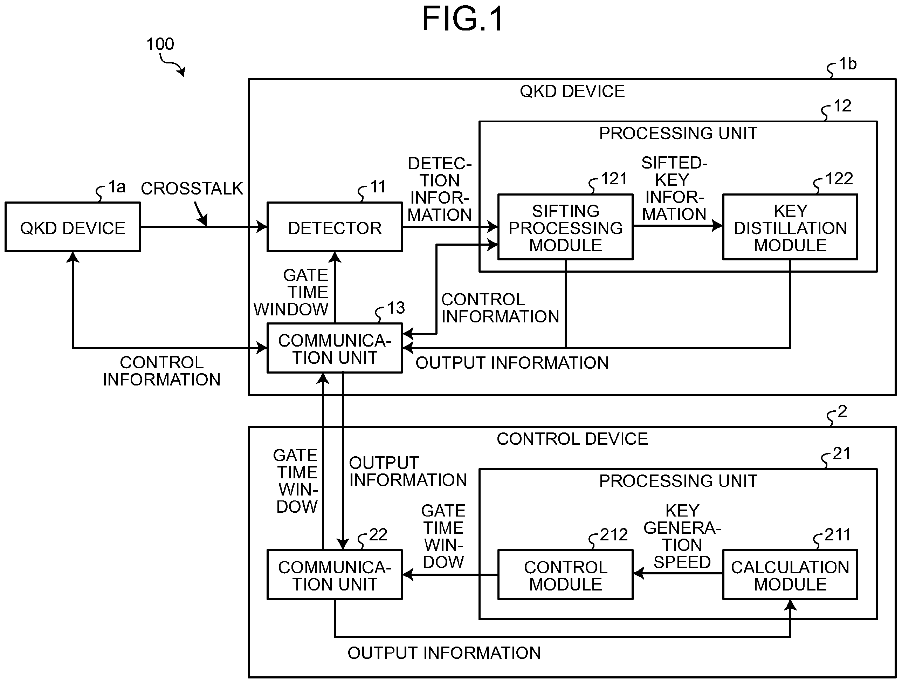

Fig. 1 is a diagram illustrating an example of a configuration of a quantum key distribution system 100 according to the arrangement. The quantum key distribution system 100 according to the arrangement includes QKD devices 1a and 1b and a control device 2.

The QKD device 1a is a quantum key distribution device that transmits a photon (a quantum signal) through a quantum communication path. The QKD device 1b is a quantum key distribution device that receives the photon through the quantum communication path.

Hereinafter, in a case where the QKD devices 1a and 1b are not distinguished from each other, the term "QKD device 1" is simply used. Note that the QKD device 1 may have both functions of transmitting and receiving a photon. Stated another way, the QKD device 1a may further have a function of receiving a photon, or the QKD device 1b may further have a function of transmitting a photon.

The QKD device 1b includes a detector 11, a processing unit 12, and a communication unit 13.

The detector 11 detects a photon that has propagated through the quantum communication path to receive a quantum signal (a photon signal).

The processing unit 12 is implemented by at least one processing device. This processing device includes, for example, a control device and an arithmetic device, and is implemented by an analog or digital circuit or the like. The processing device may be a central processing unit (CPU), or may be a general-purpose processor, a microprocessor, a digital signal processor (DSP), an application specific integrated circuit (ASIC), a field-programmable gate array (FPGA), or a combination thereof.

The processing unit 12 includes a sifting processing module 121 and a key distillation module 122.

The sifting processing module 121 performs sifting processing for exchanging control information with the QKD device 1a to share cryptographic key information between the QKD devices 1a and 1b.

The key distillation module 122 performs error correction processing on the basis of the shared cryptographic key information to correct an error that has been generated in the cryptographic key information between the QKD devices 1a and 1b, and further performs privacy amplification processing that corresponds to information compression for canceling information that may have been eavesdropped by an eavesdropper in the cryptographic key information.

As a result of processing performed by the key distillation module 122, eventually, the QKD devices 1a and 1b can share a cryptographic key that is ensured not to have been eavesdropped. Processing from error correction to privacy amplification processing is collectively referred to as key distillation processing.

The shared cryptographic key is used when data encrypted communication is performed between the QKD devices 1a and 1b or between applications that operate in devices that are respectively connected to the QKD devices 1a and 1b.

The communication unit 13 is implemented by a wired or wireless communication interface (IF). For example, the communication unit 13 transmits or receives the control information in sifting processing to/from the QKD device 1a.

As another example, the communication unit 13 transmits or receives data to/from the control device 2. Specifically, the communication unit 13 receives, from the sifting processing module 121 and the key distillation module 122, data to be used to calculate key generation speed (hereinafter referred to as "output information"), and transmits the output information to the control device 2. When the communication unit 13 has received the gate time window described later from the control device 2, the communication unit 13 inputs the gate time window to the detector 11.

### Performance/Key Generation Speed

The key generation speed, which is an amount per unit time of a cryptographic key to be shared, corresponds to operation speed performance of the QKD device 1. The use of a larger amount of cryptographic key enables secure encrypted communication with higher speed, and therefore a QKD device 1 having higher key generation speed can be said to be a QKD device 1 having higher performance.

### Security

In quantum key distribution, a quantum that is used to share a cryptographic key conforms to the uncertainty principle stating that a state changes when the quantum is observed, which is one of the basic principles in quantum mechanics. According to this characteristic, when an eavesdropper has observed, on a quantum communication path, a quantum with the encoded cryptographic key information that has been transmitted by the QKD device 1a, a state of the quantum has changed, and the QKD device 1b that has received the quantum can know that the quantum has been observed by the eavesdropper.

In this case, a change in the state of the quantum appears as an error rate (a quantum bit error rate, QBER) of a link between the QKD devices 1a and 1b. If an eavesdropper has made an attempt to eavesdrop a quantum, a state of the quantum has changed, and the QBER has increased, and therefore the QKD devices 1a and 1b can know the presence of the eavesdropper.

However, a measured value in quantum key distribution, such as the QBER, does not only vary according to the presence of the eavesdropper, but also varies according to interminglement of unrelated light in an optical fiber of the quantum communication path and an external factor (an environmental factor) such as temperature change, but the QKD device 1 cannot discriminate a difference among them. In view of the above, in order to guarantee security, privacy amplification processing is performed to perform information compression, in general, under the assumption that even a variation in a measured value in quantum key distribution due to an environmental factor has resulted from the presence of an eavesdropper, that is, under the assumption that information has been eavesdropped by the eavesdropper, and therefore a higher QBER causes slower key generation speed.

### Crosstalk

As the quantum communication path, an optical fiber or free space (free space optical communication) is generally used. In the case of a QKD device 1 according to a scheme of transmitting a photon by using the optical fiber, many quantum-signal optical fibers through which a photon for quantum key distribution is transmitted are adjacent to an optical fiber that is used for another use in an actual field. Therefore, signal light for communication leaks from the adjacent optical fiber into the quantum-signal optical fiber depending on an installation environment, and this is called crosstalk (Fig. 1).

Examples of a source of crosstalk include data communication in the adjacent optical fiber, and a signal that the eavesdropper applied to the quantum communication path (the optical fiber or the free space) for the purpose of disturbance.

In a case where a quantum signal wavelength is different from a wavelength of crosstalk, crosstalk can be reduced by using a wavelength filter. However, in a case where the quantum signal wavelength is equal to the wavelength of crosstalk, crosstalk cannot be reduced by using the wavelength filter. Furthermore, for example, in a case where a source of crosstalk is known, and is controllable by a person who has installed the QKD device 1, for example, like a classical signal (a control signal) for quantum key distribution, it is possible to perform time multiplexing to avoid crosstalk. However, in a case where a source of crosstalk is used for communication use that is quite different from quantum key distribution or another case, the source of crosstalk is uncontrollable. Furthermore, a method of selecting, as the quantum-signal optical fiber, an optical fiber that is physically separated from an optical fiber serving as a source of crosstalk is also effective, but the person who has installed the QKD device 1 may not freely select the quantum-signal optical fiber in some situations.

Next, the control device 2 will be described. The control device 2 includes a processing unit 21 and a communication unit 22.

The processing unit 21 is implemented by at least a single processing device. This processing device includes, for example, a control device and an arithmetic device, and is implemented by an analog or digital circuit or the like. The processing device may be a central processing unit (CPU), or may be a general-purpose processor, a microprocessor, a digital signal processor (DSP), an ASIC, an FPGA, or a combination thereof. The processing unit 21 includes a calculation module 211 and a control module 212.

The communication unit 22 is implemented by a wired or wireless communication IF. The communication unit 22 transmits or receives data to/from the QKD device 1b. Specifically, when the communication unit 22 has received output information from the QKD device 1b, the communication unit 22 inputs the output information to the calculation module 211. Then, when the communication unit 22 has received the gate time window described later from the control module 212, the communication unit 22 transmits the gate time window to the QKD device 1b.

Next, details of the calculation module 211 and the control module 212 will be described. The calculation module 211 calculates key generation speed by using the output information of the QKD device 1b that has been input from the communication unit 22. An example of the output information is sifted-key information that has been output from the sifting processing module 121. For example, the sifted-key information includes generation speed of a shifted key (a count rate) and a sample error rate (a sample QBER). The sample error rate is a QBER that is calculated from a portion of the sifted key.

Another example of the output information is a QBER that has been output from the key distillation module 122. Cryptographic key generation speed based on the QBER that has been output from the key distillation module 122 is a value at a time when generation of a final cryptographic key has been completed, and therefore the cryptographic key generation speed has high accuracy. However, there is a need to stand by until the entirety of key distillation processing has finished, and therefore it takes time to know the cryptographic key generation speed.

For example, the calculation module 211 calculates the key generation speed on the basis of the QBER that has been output from the key distillation module 122. Specifically, the calculation module 211 may calculate (update) the cryptographic key generation speed every time the QBER is output from the key distillation module 122. Furthermore, the calculation module 211 may calculate the key generation speed on the basis of the mean of a plurality of cryptographic key generation speeds that has been acquired during a unit time period.

On the other hand, in a case where the calculation module 211 calculates the key generation speed in a simplified manner on the basis of the output information that has been output from the sifting processing module 121, the output information that has been output from the sifting processing module 121 is not a final result, and therefore accuracy decreases. However, information can be updated every time sifted-key processing terminates, and this has an advantage in which the frequency of feedback can be increased.

Hereinafter, the key generation speed that is calculated in a simplified manner on the basis of the output information that has been output from the sifting processing module 121 is referred to a simplified secure key rate (SKR).

Note that a simplified SKR using the generation speed of the sifted key (the count rate) and the sample error rate (the sample QBER) is approximately calculated on the basis of, for example, the description of P. W. Shor and J. Preskill, "Simple proof of security of the BB84 quantum key distribution protocol" Phys. Rev. Lett., vol. 85, pp. 441-444, Jul 2000, and the description of Z. L. Yuan, A. Plews, R. Takahashi, K. Doi, W. Tam, A. W. Sharpe, A. R. Dixon, E. Lavelle, J. F. Dynes, A. Murakami, M. Kujiraoka, M. Lucamarini, Y. Tanizawa, H. Sato, and A. J. Shields, "10 Mb/s quantum key distribution" (for example, calculation formula (1) of a SKR in Z. L. Yuan, A. Plews, R. Takahashi, K. Doi, W. Tam, A. W. Sharpe, A. R. Dixon, E. Lavelle, J. F. Dynes, A. Murakami, M. Kujiraoka, M. Lucamarini, Y. Tanizawa, H. Sato, and A. J. Shields, "10 Mb/s quantum key distribution").

Which of the output information of the sifting processing module 121 and the output information of the key distillation module 122 will be used for the calculation module 211 to calculate the key generation speed is determined on the basis of, for example, setting of the calculation module 211.

The control module 212 controls the gate time window of the detector 11 on the basis of the key generation speed that has been calculated by the calculation module 211.

### Example of Quantum Key Distribution Method

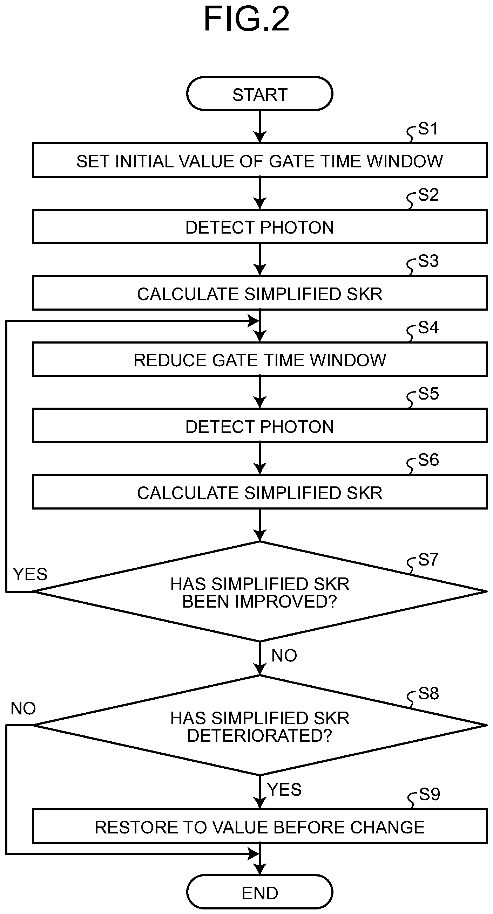

Fig. 2 is a flowchart illustrating an example of a quantum key distribution method according to the arrangement. With reference to Fig. 2, description will be provided by using, as an example, a case where the processing unit 21 sets an initial value of the gate time window, and performs feedback control using the simplified SKR as the cryptographic key generation speed to perform control to gradually reduce the gate time window to a value that is smaller than the initial value.

First, the control module 212 sets the initial value of the gate time window for the detector 11 (Step S1). Next, the detector 11 detects a photon that has been emitted from the QKD device 1a, has propagated through the quantum communication path, and has reached the QKD device 1b (Step S2). The photon is converted into an electric signal by the detector 11 in which the initial value (a predetermined gate time window) has been set as the gate time window.

Next, the calculation module 211 calculates the simplified SKR described above (Step S3). Specifically, the communication unit 22 receives, from the sifting processing module 121, the generation speed of the sifted key (the count rate) and the sample error rate as the output information, and inputs the output information to the calculation module 211. The calculation module 211 calculates the simplified SKR described above by using the output information.

Next, the control module 212 reduces a set value of the gate time window to reduce a width of gate time during which conversion is performed from the photon into an electric signal (Step S4).

Next, the detector 11 detects a photon that has been emitted from the QKD device 1a, has propagated through the quantum communication path, and has reached the QKD device 1b (Step S5). Next, the calculation module 211 calculates the simplified SKR described above (Step S6). Steps S5 and S6 are similar to Steps S1 and S2 described above, and therefore a detailed description is omitted.

Next, the control module 212 compares the simplified SKR that has been calculated before a reduction in the set value of the gate time window in Step S4 with the simplified SKR that has been calculated in Step S6, and determines whether the simplified SKR has been improved (Step S7).

In a case where the simplified SKR has been improved (Step S7, Yes), the processing returns to the process of Step S4. Stated another way, in a case where the simplified SKR before a reduction in the gate time window is greater than the simplified SKR after a reduction in the gate time window, the control module 212 performs control to further reduce the gate time window.

In a case where the simplified SKR has not been improved (Step S7, No), the processing proceeds to Step S8. In a case where the simplified SKR has deteriorated (Step S8, Yes), that is, in a case where the simplified SKR after a reduction in the gate time window is smaller than the simplified SKR before a reduction in the gate time window, the control module 212 restores the gate time window to a value before change to increase the gate time window (Step S9).

If the simplified SKR has not deteriorated (Step S8, No), that is, if the simplified SKR has not changed, the control module 212 does not perform Step S9, and performs control to maintain the gate time window.

Feedback control of a cycle of Steps S4 to S7 described above is repeatedly performed while improvements in the simplified SKR are expected.

In a case where the detector 11 operating in a gated mode is used to detect a photon, as the gate time decreases, an amount of entering of crosstalk also decreases, but an amount of detection of a quantum signal also decreases. In view of this, as illustrated in the flowchart of Fig. 2, the control module 212 performs feedback control on the gate time window by using the simplified SKR as an index to optimize a balance between a decrease in the cryptographic key generation speed according to an increase in an error rate due to crosstalk and a decrease in the cryptographic key generation speed due to a decrease in the quantum signal.

Note that the index is not limited to the simplified SKR, and a cryptographic key generation speed based on the QBER that has been output from the key distillation module 122 may be used.

As described above, in the control device 2 according to the arrangement, the calculation module 211 calculates the cryptographic key generation speed on the basis of the output information that has been output from the QKD device 1b that includes the detector 11 that detects a photon to be used to generate the cryptographic key according to QKD. Then, the control module 212 controls the gate time window during which the photon is detected, on the basis of the cryptographic key generation speed.

As a result, the control device 2 according to the arrangement makes it possible to improve the key generation speed while preventing an error rate of quantum key distribution from increasing due to crosstalk.

### First Variation of Arrangement

Next, a first variation of the arrangement will be described. In the description of the first variation, a description that is similar to the description of the arrangement will be omitted, and a difference from the arrangement will be described. In the first variation, an example where the control device 2 sets a minimum value of the gate time window, and performs control not to make the gate time window set for the detector 11 smaller than the minimum value will be described.

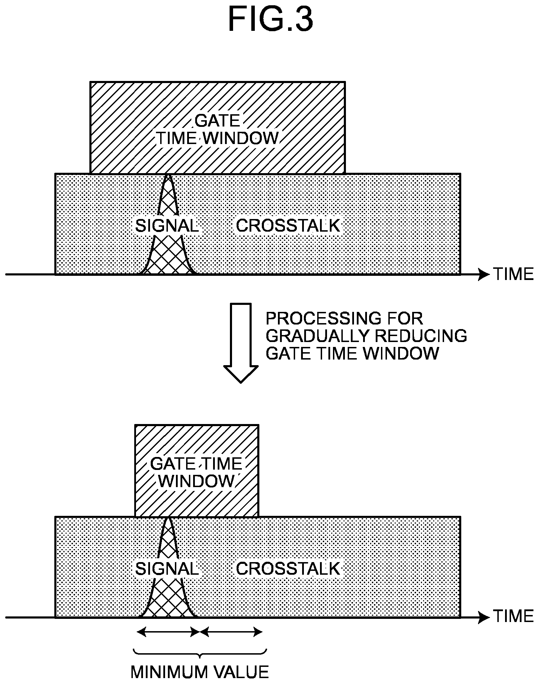

Fig. 3 is a diagram for explaining an example of a method of controlling the gate time window according to the first variation of the arrangement. In the example of Fig. 3, it is assumed that crosstalk is contiguous waves. In the case of the BB84 scheme, an avalanche photodiode (APD) operating in the gated mode is generally used, and the error rate increases by crosstalk during gate time/2/ (crosstalk and a signal), the key is excessively compressed, and the key generation speed decreases.

In performing processing for gradually reducing the gate time window in the cycle of Steps S4 to S7 in Fig. 2 described above, the control module 212 according to the first variation performs control so that the gate time window does not become smaller than a predetermined minimum value. Stated another way, in a case where a further reduction in the gate time window makes the gate time window smaller than the predetermined minimum value, the control module 212 according to the first variation terminates the processing described above for gradually reducing the gate time window.

It is assumed that the predetermined minimum value is a value that corresponds to two pulses of a photon signal, considering, for example, that it takes time for the photon signal to rise after a gate has opened.

According to the first variation, a minimum value of the gate time window is set to a gate time window that corresponds to two pulses of a signal, and this makes it possible to necessarily detect a pulse signal during a single period.

### Second Variation of Arrangement

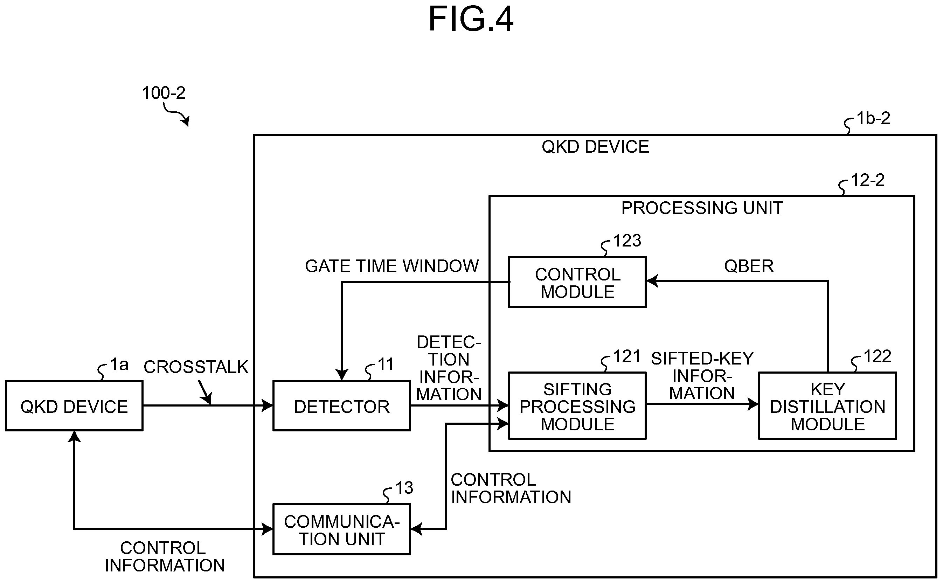

Next, a second variation of the arrangement will be described. In the description of the second variation, a description that is similar to the description of the arrangement will be omitted, and a difference from the arrangement will be described. In the second variation, an example in a case where control performed on the gate time window by the control device 2 according to the arrangement described above is performed by a QKD device 1b-2 (see Fig. 4) in contrast to the control device 2 will be described.

### Example of Configuration

Fig. 4 is a diagram illustrating an example of a configuration of a quantum key distribution system 100-2 according to the second variation of the arrangement. The quantum key distribution system 100-2 according to the second variation includes QKD devices 1a and 1b-2. The QKD device 1b-2 includes the detector 11, a processing unit 12-2, and the communication unit 13. The second variation has been changed from the arrangement described above in that the processing unit 12-2 further includes a control module 123.

The control module 123 receives feedback of the cryptographic key generation speed from the key distillation module 122, and performs feedback control to gradually reduce the gate time window by using the cryptographic key generation speed as an index. Details of feedback control to gradually reduce the gate time window are similar to the flowchart according to the arrangement described above (see Fig. 2), and therefore description will be omitted.

The quantum key distribution system 100-2 according to the second variation exhibits advantageous effects that are similar to advantageous effects of the quantum key distribution system 100 according to the arrangement described above.

### Third Variation of Arrangement

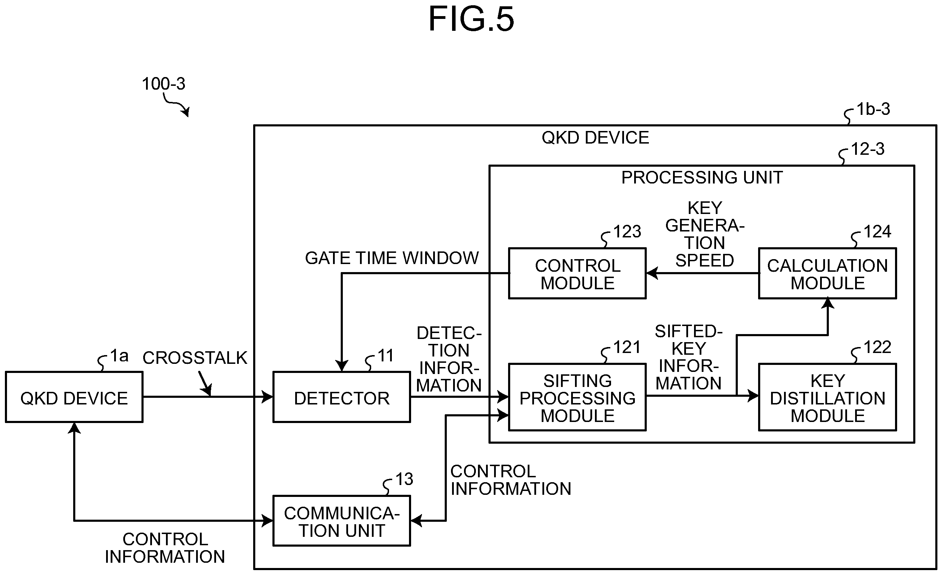

Next, a third variation of the arrangement will be described. In the description of the third variation, a description that is similar to the description of the arrangement will be omitted, and a difference from the arrangement will be described. In the third variation, an example in a case where control performed on the gate time window by the control device 2 according to the arrangement described above is performed by a QKD device 1b-3 (see Fig. 5) in contrast to the control device 2 will be described.

### Example of Configuration

Fig. 5 is a diagram illustrating an example of a configuration of a quantum key distribution system 100-3 according to the third variation of the arrangement. The quantum key distribution system 100-3 according to the third variation includes QKD devices 1a and 1b-3. The QKD device 1b-3 includes the detector 11, a processing unit 12-3, and the communication unit 13. The third variation has been changed from the arrangement described above in that the processing unit 12-3 further includes the control module 123 and a calculation module 124.

The control module 123 receives feedback of the key generation speed from the key distillation module 122, and performs feedback control to gradually reduce the gate time window by using the key generation speed as an index. Details of feedback control to gradually reduce the gate time window are similar to the flowchart according to the arrangement described above (see Fig. 2), and therefore description will be omitted.

The calculation module 124 calculates the key generation speed by using the sifted-key information described above that has been input from the sifting processing module 121. A method of calculating the key generation speed is similar to a method in the description of the calculation module 211 according to the arrangement described above, and therefore description will be omitted.

The quantum key distribution system 100-3 according to the third variation exhibits advantageous effects that are similar to advantageous effects of the quantum key distribution system 100 according to the arrangement described above.

Finally, an example of a hardware configuration of the QKD device 1 and the control device 2 according to the arrangement will be described.

### Example of Hardware Configuration

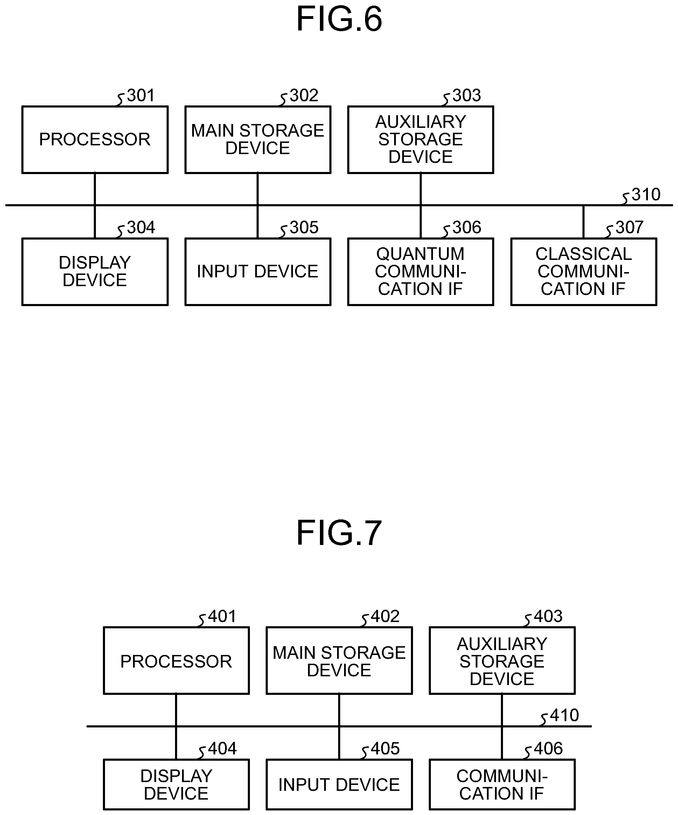

Fig. 6 is a diagram illustrating an example of a hardware configuration of the QKD device 1 according to the arrangement. The QKD device 1 according to the arrangement includes a processor 301, a main storage device 302, an auxiliary storage device 303, a display device 304, an input device 305, a quantum communication IF 306, and a classical communication IF 307.

The processor 301, the main storage device 302, the auxiliary storage device 303, the display device 304, the input device 305, the quantum communication IF 306, and the classical communication IF 307 are connected via a bus 310.

The processor 301 executes a program that has been read from the auxiliary storage device 303 into the main storage device 302. The main storage device 302 is a memory such as a ROM and a RAM. The auxiliary storage device 303 is an HDD, a memory card, and the like.

The display device 304 displays a state or the like of the QKD device 1. The input device 305 receives an input from a user. Note that the display device 304 and the input device 305 may be implemented by a touch panel or the like that has a display function and an input function. Furthermore, the display device 304 and the input device 305 may be omitted from the QKD device 1. In this case, for example, a display function and an input function of an external device that is connected to the QKD device 1 are used.

The quantum communication IF 306 is an interface for connecting to a QKD link through which photons are transmitted. The classical communication IF 307 is an interface for connecting to a transmission path or the like through which control signals are transmitted from/to a counterpart QKD device 1.

Fig. 7 is a diagram illustrating an example of a hardware configuration of the control device 2 according to the arrangement. The control device 2 includes a processor 401, a main storage device 402, an auxiliary storage device 403, a display device 404, an input device 405, and a communication IF 406.

The processor 401, the main storage device 402, the auxiliary storage device 403, the display device 404, the input device 405, and the communication IF 406 are connected via a bus 410.

The processor 401 executes a program that has been read from the auxiliary storage device 403 into the main storage device 402. The main storage device 402 is a memory such as a ROM and a RAM. The auxiliary storage device 403 is an HDD, a memory card, and the like.

The display device 404 displays a state or the like of the control device 2. The input device 405 receives an input from a user. Note that the display device 404 and the input device 405 may be implemented by a touch panel or the like that has a display function and an input function. Furthermore, the display device 404 and the input device 405 may be omitted from the control device 2. In this case, for example, a display function and an input function of an external device that is connected to the control device 2 are used.

The communication IF 406 is an interface for connecting to the transmission path.

The programs executed by the QKD device 1 and the control device 2 according to the arrangement are files in an installable format or an executable format, are stored in a computer-readable storage medium such as a CD-ROM, a memory card, a CD-R, and a digital versatile disc (DVD), and are provided as a computer program product.

In addition, the programs executed by the QKD device 1 and the control device 2 according to the arrangement may be stored on a computer that is connected to a network such as the Internet, and may be provided by being downloaded via the network.

Furthermore, the programs executed by the QKD device 1 and the control device 2 according to the arrangement may be provided via a network such as the Internet without being downloaded.

Moreover, the programs executed by the QKD device 1 and the control device 2 according to the arrangement may be provided by having been incorporated into a ROM or the like in advance.

The program executed by the QKD device 1 according to the arrangement has a module configuration including functions that can be achieved by the program from among functional configurations of the QKD device 1 according to the arrangement. The processor 301 reads the program from a storage medium such as the auxiliary storage device 303, and executes the program, and therefore the functions to be achieved by the program are loaded into the main storage device 302. Stated another way, the functions to be achieved by the program are generated on the main storage device 302.

Similarly, the program executed by the control device 2 according to the arrangement has a module configuration including functions that can be achieved by the program from among functional configurations of the control device 2 according to the arrangement. The processor 401 reads the program from a storage medium such as the auxiliary storage device 403, and executes the program, and therefore the functions to be achieved by the program are loaded into the main storage device 402. Stated another way, the functions to be achieved by the program are generated on the main storage device 402.

Note that some or all of the functions of the QKD device 1 and the control device 2 according to the arrangement may be achieved by hardware such as an integrated circuit (IC). The IC is, for example, a processor that performs dedicated processing.

Furthermore, in a case where respective functions are achieved by using a plurality of processors, each of the processors may achieve one of the respective functions, or may achieve two or more of the respective functions.

Furthermore, an operation mode of the control device 2 according to the arrangement may be arbitrary. The control device 2 may operate, for example, as a cloud system on a network to control the gate time window of one or more QKD devices 1 that are connected via the network.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the scope of the invention as defined by the appended claims. The accompanying claims are intended to cover such forms or modifications as would fall within the scope of the inventions.

### Supplementary Notes

Note the arrangement described above can be summarized into the technical ideas described below.

### Technical idea 1

A control device includes
a processing unit configured to:
calculate a generation speed of a cryptographic key based on output information output from a quantum key distribution (QKD) device, the QKD device including a detector configured to detect photon to be used to generate the cryptographic key by QKD; and
control a gate time window during which the photon is detected, based on the generation speed of the cryptographic key.

### Technical idea 2

In the control device according to Technical idea 1,
the output information includes: a generation speed of a sifted key that is output by sifting processing in the QKD; and a sample quantum bit error rate (QBER) that is calculated from a portion of the sifted key, and
the processing unit calculates the generation speed of the cryptographic key based on the generation speed of the sifted key and the sample QBER.

### Technical idea 3

In the control device according to Technical idea 1,
the output information includes a QBER of the cryptographic key that is output by key distillation processing in the QKD, and
the processing unit calculates the generation speed of the cryptographic key based on the QBER.

### Technical idea 4

In the control device according to any one of Technical ideas 1 to 3,
the processing unit sets an initial value of the gate time window, and performs feedback control using the generation speed of the cryptographic key to perform control to reduce the gate time window to a value smaller than the initial value.

### Technical idea 5

In the control device according to any one of Technical ideas 1 to 4,
when the generation speed of the cryptographic key after reducing the gate time window is greater than the generation speed of the cryptographic key before reducing the gate time window, the processing unit performs control to further reduce the gate time window.

### Technical idea 6

In the control device according to any one of Technical ideas 1 to 5,
when the generation speed of the cryptographic key before reducing the gate time window is equal to the generation speed of the cryptographic key after reducing the gate time window, the processing unit terminates control to reduce the gate time window.

### Technical idea 7

In the control device according to any one of Technical ideas 1 to 6**,**
when the generation speed of the cryptographic key after reducing the gate time window is smaller than the generation speed of the cryptographic key before reducing the gate time window, the processing unit restores the gate time window to a value before reducing the gate time window, and terminates control to reduce the gate time window.

### Technical idea 8

In the control device according to any one of Technical ideas 1 to 7,
the processing unit determines a minimum value of the gate time window, and performs control to reduce the gate time window so that the gate time window does not become smaller than the minimum value.

### Technical idea 9

In the control device according to any one of Technical ideas 1 to 8,
the minimum value of the gate time window includes a value that corresponds to two pulses of a signal of the photon.

### Technical idea 10

A quantum key distribution system includes:
the control device according to any one of Technical ideas 1 to 9; and
a plurality of the QKD devices.

### Technical idea 11

A control method includes:
calculating a generation speed of a cryptographic key based on output information output from a quantum key distribution (QKD) device, the QKD device including a detector configured to detect photon to be used to generate the cryptographic key by QKD; and
controlling a gate time window during which the photon is detected, based on the generation speed of the cryptographic key.

### Technical idea 12

A computer-readable medium includes instructions which, when executed by a computer, cause the computer to perform:
calculating a generation speed of a cryptographic key based on output information output from a quantum key distribution (QKD) device, the QKD device including a detector configured to detect photon to be used to generate the cryptographic key by QKD; and
controlling a gate time window during which the photon is detected, based on the generation speed of the cryptographic key.

## Claims

1. A control device (2) comprising
a processing unit (21) configured to:
calculate a generation speed of a cryptographic key based on output information output from a quantum key distribution (QKD) device (1a, 1b), the QKD device (1a, 1b) including a detector configured to detect photon to be used to generate the cryptographic key by QKD; and
control a gate time window during which the photon is detected, based on the generation speed of the cryptographic key.

2. The control device (2) according to claim 1, wherein
the output information includes: a generation speed of a sifted key that is output by sifting processing in the QKD; and a sample quantum bit error rate (QBER) that is calculated from a portion of the sifted key, and
the processing unit (21) calculates the generation speed of the cryptographic key based on the generation speed of the sifted key and the sample QBER.

3. The control device (2) according to claim 1, wherein
the output information includes a QBER of the cryptographic key that is output by key distillation processing in the QKD, and
the processing unit (21) calculates the generation speed of the cryptographic key based on the QBER.

4. The control device (2) according to any one of claims 1 to 3, wherein
the processing unit (21) sets an initial value of the gate time window, and performs feedback control using the generation speed of the cryptographic key to perform control to reduce the gate time window to a value smaller than the initial value.

5. The control device (2) according to claim 4, wherein
when the generation speed of the cryptographic key after reducing the gate time window is greater than the generation speed of the cryptographic key before reducing the gate time window, the processing unit (21) performs control to further reduce the gate time window.

6. The control device (2) according to claim 4, wherein
when the generation speed of the cryptographic key before reducing the gate time window is equal to the generation speed of the cryptographic key after reducing the gate time window, the processing unit (21) terminates control to reduce the gate time window.

7. The control device (2) according to claim 4, wherein
when the generation speed of the cryptographic key after reducing the gate time window is smaller than the generation speed of the cryptographic key before reducing the gate time window, the processing unit (21) restores the gate time window to a value before reducing the gate time window, and terminates control to reduce the gate time window.

8. The control device (2) according to claim 4, wherein
the processing unit (21) determines a minimum value of the gate time window, and performs control to reduce the gate time window so that the gate time window does not become smaller than the minimum value.

9. The control device (2) according to claim 8, wherein
the minimum value of the gate time window includes a value that corresponds to two pulses of a signal of the photon.

10. A quantum key distribution system comprising:
the control device (2) according to any one of claims 1 to 3; and
a plurality of the QKD devices (1a, 1b).

11. A control method comprising:
calculating a generation speed of a cryptographic key based on output information output from a quantum key distribution (QKD) device (1a, 1b), the QKD device (1a, 1b) including a detector configured to detect photon to be used to generate the cryptographic key by QKD; and
controlling a gate time window during which the photon is detected, based on the generation speed of the cryptographic key.

12. A computer-readable medium comprising instructions which, when executed by a computer, cause the computer to perform:
calculating a generation speed of a cryptographic key based on output information output from a quantum key distribution (QKD) device (1a, 1b), the QKD device (1a, 1b) including a detector configured to detect photon to be used to generate the cryptographic key by QKD; and
controlling a gate time window during which the photon is detected, based on the generation speed of the cryptographic key.
